# EUROPEAN PATENT APPLICATION

(11) **EP 1 906 565 A1**
(43) Date of publication of application: **02.04.2008**
(21) Application number: 07006728.5
(22) Date of filing: 30.03.2007
(51) Int. Cl.: H04H 1/00

(54) **Method and system for integrated cable modem and DVB-H receiver and/or transmitter**

(30) Priority: 28.09.2006 US 536351
(71) Applicant: Broadcom Corporation, Irvine, CA 92617 (US)
(72) Inventor: Rofougaran, Ahmadreza, Irvine California 92618-7013 (US)
(74) Representative: Jehle, Volker Armin

(57) **Abstract**

Certain aspects of a method and system for processing multimedia data may include receiving a DVB-H signal via a DVB-H receiver integrated within a cable modem. The cable modem may include a wireless interface and/or a wired interface. The received DVB-H signal may be routed from within the cable modem to a multimedia device coupled to the cable modem via the wired or wireless interface. An audio signal and/or a video signal may be generated based on the received DVB-H signal, and may be communicated to a multimedia device communicatively coupled to the cable modem. The wired interface may comprise an Ethernet interface or a serial interface. The wireless interface may comprise a WLAN interface. The multimedia signal may include a multimedia standard native to the multimedia device.

## Description

### CROSS-REFERENCE TO RELATED APPLICATIONS/INCORPORATION BY REFERENCE

### [0001] [Not Applicable]

### FIELD OF THE INVENTION

Certain embodiments of the invention relate to processing of signals in a multimedia communication system. More specifically, certain embodiments of the invention relate to a method and system for an integrated cable modem and DVB-H receiver and/or transmitter.

### BACKGROUND OF THE INVENTION

Present developments in wireless technology may adapt broadcasting to mobile services. One limitation has been that broadcasting may often require high bit rate data transmission at rates higher than could be supported by existing mobile communications networks. However, with emerging developments in wireless communications technology, even this obstacle may be overcome. Terrestrial television and radio broadcast networks have made use of high power transmitters covering broad service areas, which enable one-way distribution of content to user equipment such as televisions and radios. By contrast, wireless telecommunications networks have made use of low power transmitters, which have covered relatively small areas known as "cells". Unlike broadcast networks, wireless networks may be adapted to provide two-way interactive services between users of user equipment such as telephones and computer equipment.

Standards for digital television terrestrial broadcasting (DTTB) have evolved around the world with different systems being adopted in different regions. The three leading DTTB systems are, the advanced standards technical committee (ATSC) system, the digital video broadcast terrestrial (DVB-T) system, and the integrated service digital broadcasting terrestrial (ISDB-T) system. The ATSC system has largely been adopted in North America, South America, Taiwan, and South Korea. This system adapts trellis coding and 8-level vestigial sideband (8-VSB) modulation. The DVB-T system has largely been adopted in Europe, the Middle East, Australia, as well as parts of Africa and parts of Asia. The DVB-T system adapts coded orthogonal frequency division multiplexing (COFDM). The ISDB-T system has been adopted in Japan and adapts bandwidth segmented transmission orthogonal frequency division multiplexing (BST-OFDM). The various DTTB systems may differ in important aspects; some systems employ a 6 MHz channel separation, while others may employ 7 MHz or 8 MHz channel separations.

While 3G systems are evolving to provide integrated voice, multimedia, and data services to mobile user equipment, there may be compelling reasons for adapting DTTB systems for this purpose. One of the more notable reasons may be the high data rates that may be supported in DTTB systems. For example, DVB-T may support data rates of 15 Mbits/s in an 8 MHz channel in a wide area SFN. There are also significant challenges in deploying broadcast services to mobile user equipment. Many handheld portable devices, for example, may require that services consume minimum power to extend battery life to a level, which may be acceptable to users. Another consideration is the Doppler effect in moving user equipment, which may cause inter-symbol interference in received signals. Among the three major DTTB systems, ISDB-T was originally designed to support broadcast services to mobile user equipment. While DVB-T may not have been originally designed to support mobility broadcast services, a number of adaptations have been made to provide support for mobile broadcast capability. The adaptation of DVB-T to mobile broadcasting is commonly known as DVB handheld (DVB-H).

To meet requirements for mobile broadcasting the DVB-H specification may support time slicing to reduce power consumption at the user equipment, addition of a 4K mode to enable network operators to make tradeoffs between the advantages of the 2K mode and those of the 8K mode, and an additional level of forward error correction on multi-protocol encapsulated data - forward error correction (MPE-FEC) to make DVB-H transmissions more robust to the challenges presented by mobile reception of signals and to potential limitations in antenna designs for handheld user equipment. DVB-H may also use the DVB-T modulation schemes, like QPSK and 16-quadrature amplitude modulation (16-QAM), which may be more resilient to transmission errors. MPEG audio and video services may be more resilient to error than data, thus additional forward error correction may not be required to meet DTTB service objectives.

The MPE-FEC may comprise Reed-Solomon coding of IP data packets, or packets using other data protocols. The 4K mode in DVB-H may utilize 3,409 carriers, each with a useful duration of 448 µs for an 8MHz channel. The 4K mode may enable network operators to realize greater flexibility in network design at minimum additional cost. Importantly, DVB-T and DVB-H may coexist in the same geographical area. Transmission parameter signaling (TPS) bits that are carried in the header of transmitted messages may indicate whether a given DVB transmission is DVB-T or DVB-H, in addition to indicating whether DVB-H specific features, such as time slicing, or MPE-FEC are to be performed at the receiver. As time slicing may be a mandatory feature of DVB-H, an indication of time slicing in the TPS may indicate that the received information is from a DVB-H service.

Time slicing, as used by DVB-H, may reduce power consumption in user equipment by increasing the burstiness of data transmission. Instead of transmitting data at the received rate, under time slicing techniques, the transmitter may delay the sending of data to user equipment and send data later but at a higher bit rate. This may reduce total data transmission time over the air, time, which may be used to temporarily power down the receiver at the user equipment. Time slicing may also facilitate service handovers as user equipment moves from one cell to another because the delay time imposed by time slicing may be used to monitor transmitters in neighboring cells. Once the DVB-H signals are received by the handheld, the user is limited by using only the handheld to display the received DVB-H video signals and listen to the corresponding DVB-H audio signals.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A system and/or method is provided for an integrated cable modem and DVB-H receiver and/or transmitter, substantially as shown in and/or described in connection with at least one of the figures, as set forth more completely in the claims.
According to an aspect of the invention, a method for processing multimedia data comprises:
receiving a DVB-H signal via a DVB-H receiver integrated within a cable modem comprising a wireless interface or a wired interface; and
routing from within said cable modem, said received DVB-H signal to at least one multimedia device communicatively coupled to said cable modem via said wireless or said wired interface.
Advantageously, the method further comprises generating at least one of: an audio signal and a video signal, based on said received DVB-H signal.
Advantageously, the method further comprises communicating said at least one of: said audio signal and said video signal to at least one multimedia device communicatively coupled to said cable modem.
Advantageously, said wired interface comprises at least one of: an Ethernet interface, and a serial interface.
Advantageously, said wireless interface comprises a WLAN interface.
Advantageously, the method further comprises converting said received DVB-H signal into at least one converted multimedia signal, prior to said routing to said at least one multimedia device.
Advantageously, said at least one converted multimedia signal comprises a multimedia standard native to said at least one multimedia device.
Advantageously, the method further comprises storing said received DVB-H signal in a memory integrated in said cable modem.
Advantageously, the method further comprises storing at least one of: an audio signal and a video signal based on said received DVB-H signal, in a storage device coupled to said cable modem.
Advantageously, said storage device comprises a hard disk drive (HDD) communicatively coupled to said cable modem.
Advantageously, the method further comprises switching between receiving a cable signal via said cable modem and receiving said DVB-H signal via said DVB-H receiver.
Advantageously, the method further comprises receiving a cable signal via said cable modem simultaneously with said receiving of said DVB-H signal via said DVB-H receiver.
According to an aspect of the invention, a system for processing multimedia data comprises:
DVB-H receiver circuitry that enables receiving of a DVB-H signal, said DVB-H receiver circuitry integrated with cable modem circuitry comprising a wireless interface or a wired interface; and
said cable modem circuitry enables routing of said received DVB-H signal from within said cable modem circuitry to at least one multimedia device communicatively coupled to said cable modem circuitry via said wireless or said wired interface.
Advantageously, said cable modem circuitry enables generating of at least one of: an audio signal and a video signal, based on said received DVB-H signal.
Advantageously, said cable modem circuitry enables communication of said at least one of: said audio signal and said video signal to at least one multimedia device communicatively coupled to said cable modem.
Advantageously, said wired interface comprises at least one of: an Ethernet interface, and a serial interface.
Advantageously, said wireless interface comprises a WLAN interface.
Advantageously, said cable modem circuitry enables converting of said received DVB-H signal into at least one converted multimedia signal, prior to said routing to said at least one multimedia device.
Advantageously, said at least one converted multimedia signal comprises a multimedia standard native to said at least one multimedia device.
Advantageously, said cable modem circuitry enables storing of said received DVB-H signal in a memory integrated in said cable modem circuitry.
Advantageously, said cable modem circuitry enables storing of at least one of: an audio signal and a video signal based on said received DVB-H signal, in a storage device coupled to said cable modem circuitry.
Advantageously, said storage device comprises a hard disk drive (HDD) communicatively coupled to said cable modem circuitry.
Advantageously, said cable modem circuitry enables switching between receiving a cable signal via said cable modem circuitry and receiving said DVB-H signal via said DVB-H receiver circuitry.
Advantageously, said cable modem circuitry enables receiving of a cable signal via said cable modem circuitry simultaneously with said receiving of said DVB-H signal via said DVB-H receiver circuitry.
Advantageously, said cable modem circuitry is integrated with a set-top box (STB).
Advantageously, said cable modem circuitry comprises a single chip.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1A is a block diagram of an exemplary system for providing integrated services between a cellular network, a digital video broadcast network and a cable modem, in accordance with an embodiment of the invention.

FIG. 1B is a high-level block diagram of exemplary DVB-H receiver circuitry in a cable modem, which may be utilized in connection with an embodiment of the invention.

FIG. 2A is a block diagram of an exemplary cable modem with an integrated DVB-H receiver and/or transmitter, in accordance with an embodiment of the invention.

FIG. 2B is a block diagram of an exemplary radio frequency (RF) receiver (Rx)/transmitter (Tx) circuit with automatic calibration, in accordance with an embodiment of the invention.

FIG. 3 is a block diagram of an exemplary multimedia signal processor (MSP), which may be used in accordance with an embodiment of the invention.

FIG. 4 is a block diagram of an exemplary set-top box (STB) with an integrated DVB-H receiver and/or transmitter, in accordance with an embodiment of the invention.

FIG. 5 is a flow diagram illustrating exemplary steps for processing multimedia data, in accordance with an embodiment of the invention.

### DETAILED DESCRIPTION OF THE INVENTION

Certain aspects of a method and system for an integrated cable modem and DVB-H receiver and/or transmitter may comprise receiving a DVB-H signal via a DVB-H receiver integrated within a cable modem. The cable modem may comprise a wireless interface and/or a wired interface. The received DVB-H signal may be routed to a multimedia device communicatively coupled to the cable modem via the wired or wireless interface. An audio signal and/or a video signal may be generated based on the received DVB-H signal, and may be communicated to a multimedia device communicatively coupled to the cable modem. The wired interface may comprise an Ethernet interface or a serial interface. The wireless interface may comprise a WLAN interface. The received DVB-H signal may be stored in a memory integrated in the cable modem. An audio signal and/or a video signal based on the received DVB-H signal may be stored in a storage device coupled to the cable modem. The storage device may comprise a hard disk drive (HDD) or any other type of storage medium communicatively coupled to the cable modem. The cable modem may switch between receiving a cable signal and receiving the DVB-H signal via the DVB-H receiver. The cable modem may also receive a cable signal simultaneously with the receiving of the DVB-H signal via the DVB-H receiver.

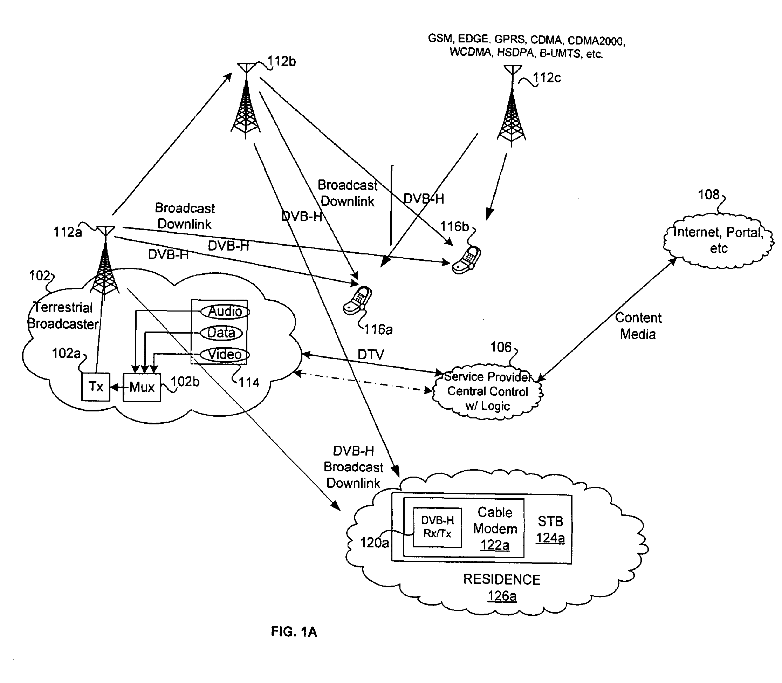

FIG. 1A is a block diagram of an exemplary system for providing integrated services between a cellular network, a digital video broadcast network and a cable modem, in accordance with an embodiment of the invention. Referring to FIG. 1A, there is shown terrestrial broadcaster network 102, service provider 106, portal 108, a set-top box (STB) 124a within a residence 126a, and mobile terminals (MTs) 116a and 116b. The terrestrial broadcaster network 102 may comprise transmitter (Tx) 102a, multiplexer (Mux) 102b, and information content source 114. The content source 114 may also be referred to as a data carousel, which may comprise audio, data and video content. The terrestrial broadcaster network 102 may also comprise DVB-H broadcast antennas 112a and 112b. The MTs 116a and 116b may also be adapted to communicate within a cellular network via antenna 112c, using one or more of the following communication standards: GSM, EDGE, GPRS, CDMA, CDMA2000, WCDMA, HSDPA, and B-UMTS. The STB 124a may comprise a cable modem 122a, and the cable modem 122a may comprise a DVB-H receiver (Rx) and/or transmitter (Tx) 120a.

The terrestrial broadcaster network 102 may comprise suitable equipment that may be adapted to encode and/or encrypt data for transmission via the transmitter 102a. The transmitter 102a in the terrestrial broadcaster network 102 may be adapted to utilize DVB-H broadcast channels to communicate information to the mobile terminals 116a, 116b, and to the DVB-H Rx/Tx 120a within the residence 126a. The multiplexer 102b associated with the terrestrial broadcaster network 102 may be utilized to multiplex data from a plurality of sources. For example, the multiplexer 102b may be adapted to multiplex various types of information such as audio, video and/or data into a single pipe for transmission by the transmitter 102a. Content media from the portal 108, which may be handled by the service provider 106 may also be multiplexed by the multiplexer 102b. The portal 108 may be an ISP service provider.

In one aspect of the invention, the terrestrial broadcaster network 102 may be adapted to provide one or more digital television (DTV) channels to the service provider 106. In this regard, the terrestrial broadcaster network 102 may comprise suitable high-speed or broadband interfaces that may be utilized to facilitate transfer of the DTV channels from the terrestrial broadcast network 102 to the service provider. The service provider 106 may then utilize at least a portion of the DTV channels to provide television (TV) on demand service, or other similar types of services to a wireless service provider network, for example. Accordingly, the service provider 106 may further comprise suitable high-speed or broadband interfaces that may be utilized to facilitate the transfer of related TV on demand information to the wireless service provider network.

Although communication links between the terrestrial broadcast network 102 and the service provider 106 may be wired communication links, the invention may be not so limited. Accordingly, at least one of these communication links may be wireless communication links. In an exemplary embodiment of the invention, at least one of these communication links may be an 802.x based communication link, such as an 802.16 or WiMax broadband access communication link. In another exemplary embodiment of the invention, at least one of these connections may be a broadband line of sight (LOS) connection.

In accordance with an exemplary embodiment of the invention, if the mobile terminal (MT) 116a is within operating range of the DVB-H broadcasting antenna 112a and moves out of the latter's operating range and into an operating range of the DVB-H broadcasting antenna 112b, then DVB-H broadcasting antenna 112b may be adapted to provide DVB-H broadcast services to the mobile terminal 116a. If the mobile terminal 116a subsequently moves back into the operating range of the DVB-H broadcasting antenna 112a, then the broadcasting antenna 112a may be adapted to provide DVB-H broadcasting service to the mobile terminal 116a. In a somewhat similar manner, if the mobile terminal (MT) 116b is within an operating range of the DVB-H broadcasting antenna 112b and moves out of the latter's operating range and into an operating range of the broadcasting antenna 112a, then the DVB-H broadcasting antenna 112a may be adapted to provide DVB-H broadcasting service to the mobile terminal 116b. If the mobile terminal 116b subsequently moves back into the operating range of broadcasting antenna 112b, then the DVB-H broadcasting antenna 112b may be adapted to provide DVB-H broadcast services to the mobile terminal 116b.

The service provider 106 may comprise suitable interfaces, circuitry, logic and/or code that may be adapted to facilitate communication between the terrestrial broadcasting network 102 and the portal 108. In an illustrative embodiment of the invention the service provider 106 may be adapted to utilize its interfaces to facilitate exchange control information with the terrestrial broadcast network 102 and to exchange control information with the portal 108. The control information exchanged by the service provider 106 with the terrestrial broadcasting network 102 and the portal 108 may be utilized to control certain operations of the mobile terminals, the terrestrial broadcast network 102 and the portal 108. The service provider 106 may also be adapted to handle certain types of service requests, which may have originated from a mobile terminal. For example, the mobile terminal 116a may request that information be delivered to it via a downlink DVB-H broadcast channel. As a result, the service provider 106 may route the requested information from the portal 108 or content service 114 to the mobile terminal 116b. The service provider 106 may also have the capability to send at least a portion of information to be delivered to, for example, mobile terminal 116a via the DVB-H broadcast channel and a remaining portion of the information to be delivered via a cellular broadcast channel.

The portal 108 may comprise suitable logic, circuitry and/or code that may be adapted to provide content media to the service provider 106 via one or more communication links. These communication links, although not shown, may comprise wired and/or wireless communication links. The content media that may be provided by the portal 108 may comprise audio, data, video or any combination thereof. In this regard, the portal 108 may be adapted to provide one or more specialized information services to the service provider 106.

The information content source 114 may comprise a data carousel. In this regard, the information content source 114 may be adapted to provide various information services, which may comprise online data including audio, video and data content. The information content source 114 may also comprise file download, and software download capabilities. In instances where a mobile terminal fails to acquire requested information from the information content source 114 or the requested information is unavailable, then the mobile terminal may acquire the requested information via, for example, a B-UMTS from the portal 108. The request may be initiated through an uplink cellular communication path.

The mobile terminals (MTs) 116a and 116b may comprise suitable logic, circuitry and/or code that may be adapted to handle the processing of uplink and downlink cellular channels for various access technologies and/or broadcast DVB-H technologies. In an exemplary embodiment of the invention, the mobile terminals 116a, 116b may be adapted to utilize one or more cellular access technologies such as GSM, GPRS, EDGE, CDMA, WCDMA, CDMA2000, HSDPA, HSUDPA, and MBMS (B-UMTS). The mobile terminals 116a, 116b may also be adapted to receive and process DVB-H broadcast signals in the DVB-H bands. For example, a mobile terminal may be adapted to receive and process DVB-H signals. A mobile terminal may be adapted to request information via a first cellular service and in response, receive corresponding information via a DVB-H broadcast service. A mobile terminal may also be adapted to request information from a service provider via a cellular service and in response, receive corresponding information via a data service, which is provided via the cellular service. The mobile terminals may also be adapted to receive DVB-H broadcast information from the DVB-H broadcast antennas 112a and 112b.

In one exemplary embodiment of the invention, a mobile terminal may be adapted to utilize a plurality of broadcast integrated circuits for receiving and processing DVB-H channels, and a plurality of cellular integrated circuits for receiving and processing cellular or PCS channels. For broadcast channels, each of the plurality of broadcast integrated circuits may be adapted to handle at least one DVB-H channel.

In another exemplary embodiment of the invention, a mobile terminal may be adapted to utilize a single broadcast integrated circuit for receiving and processing DVB-H channels, and a single cellular integrated circuit for receiving and processing cellular or PCS channels. For broadcast channels, the single broadcast integrated circuit may be adapted to handle at least one DVB-H channel. Each of the mobile terminals may comprise a single memory interface that may be adapted to handle processing of the broadcast communication information and processing of cellular communication information.

In yet another exemplary embodiment of the invention, the DVB-H Rx/Tx 120a may comprise suitable circuitry, logic and/or code and may be adapted to receive or transmit DVB-H signals. For example, the DVB-H Rx/Tx 120a may receive DVB-H signals via a DVB-H broadcast downlink from antenna 112a or 112b. Furthermore, the DVB-H Rx/Tx 120a may be implemented within a cable modem 122a. The cable modem 122a may comprise suitable circuitry, logic and/or code and may be adapted to receive and process multimedia signals received from a cable network, a satellite network, and/or a terrestrial network, for example. In this regard, the DVB-H Rx/Tx 120a within the cable modem 122a may receive and process DVB-H signals. The processed DVB-H signals may then be communicated to one or more devices communicatively coupled to the cable modem 122a. In another exemplary embodiment of the invention, the DVB-H Rx/Tx 120a and the cable modem 122a may be implemented in a single chip. The cable modem 122a and the integrated DVB-H Rx/Tx 120a may be utilized within a set-top box (STB) 124a for processing cable, satellite and/or terrestrial signals.

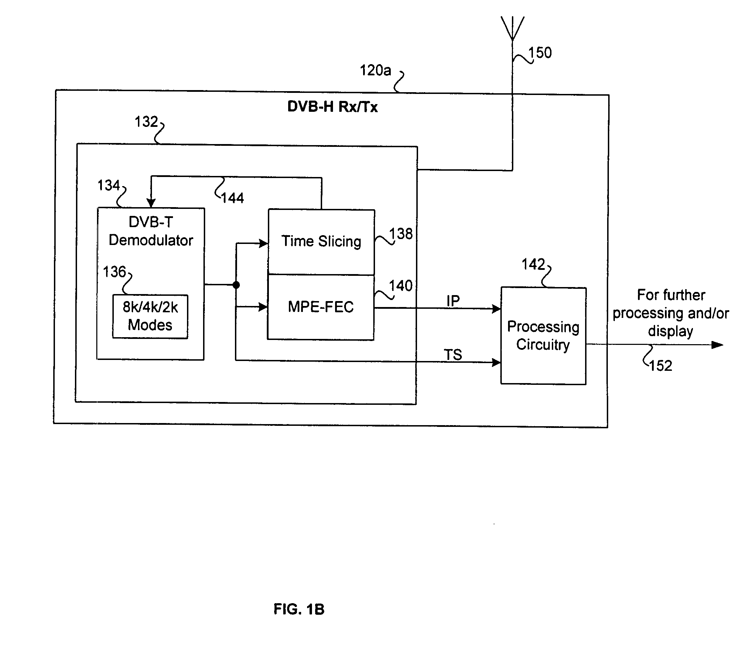

FIG. 1B is a high-level block diagram of exemplary DVB-H receiver circuitry in a cable modem, which may be utilized in connection with an embodiment of the invention. Referring to FIG. 1B, there is shown the DVB-H Rx/Tx 120a of FIG. 1A. The DVB-H Rx/Tx 120a may comprise a DVB-H demodulator 132, processing circuitry block 142, and antenna 150. The DVB-H demodulator block 132 may comprise a DVB-T demodulator 134, time slicing block 138, and multi-protocol encapsulated data - forward error correction (MPE-FEC) block 140.

The DVB-T demodulator 134 may comprise suitable circuitry, logic and/or code that may be adapted to demodulate a terrestrial DVB signal. In this regard, the DVB-T demodulator 134 may be adapted to downconvert a received DVB-T signal to a suitable bit rate that may be handled by the DVB-H Rx/Tx 120a. The DVB-T demodulator may be adapted to handle 2k, 4k and/or 8k modes, for example.

The time slicing block 138 may comprise suitable circuitry, logic and/or code that may be adapted to minimize power consumption in the DVB-H Rx/Tx 120a, particularly in the DVB-T demodulator 134. In general, time slicing reduces average power consumption in the mobile terminal by sending data in bursts via much higher instantaneous bit rates. In order to inform the DVB-T demodulator 134 when a next burst is going to be sent, a delta indicating the start of the next burst is transmitted within a current burst. During transmission, no data for an elementary stream (ES) is transmitted so as to allow other elementary streams to optimally share the bandwidth. Since the DVB-T demodulator 134 knows when the next burst will be received, the DVB-T demodulator 134 may enter a power saving mode between bursts in order to consume less power. Reference 144 indicates a control mechanism that handles the DVB-T demodulator 134 power via the time slicing block 138. The DVB-T demodulator 134 may also be adapted to utilize time slicing to monitor different transport streams from different channels. For example, the DVB-T demodulator 134 may utilize time slicing to monitor neighboring channels between bursts to optimize handover.

The MPE-FEC block 140 may comprise suitable circuitry, logic and/or code that may be adapted to provide error correction during decoding. On the encoding side, MPE-FEC encoding provides improved carrier to noise ratio (C/N), improved Doppler performance, and improved tolerance to interference resulting from impulse noise. During decoding, the MPE-FEC block 140 may be adapted to determine parity information from previously MPE-FEC encoded datagrams. As a result, during decoding, the MPE-FEC block 140 may generate datagrams that are error-free even in instances when received channel conditions are poor. The processing circuitry block 142 may comprise suitable processor, circuitry, logic and/or code that may be adapted to process IP datagrams generated from an output of the MPE-FEC block 140. The processing circuitry block 142 may also be adapted to process transport stream packets from the DVB-T demodulator 134.

In operation, DVB-H Rx/Tx 120a may receive a wireless signal, such as a DVB-H signal, a Bluetooth signal, an FM signal, and/or a WLAN signal. The received signal may be communicated to the DVB-T demodulator 134 for processing. The DVB-T demodulator 134 may be adapted to receive an input DVB-T RF signal, demodulate the received input DVB-T RF signal so as to generate data at a much lower bit rate. In this regard, the DVB-T demodulator 134 recovers MPEG-2 transport stream (TS) packets from the input DVB-T RF signal. The MPE-FEC block 140 may then correct any error that may be located in the data and the resulting IP datagrams may be sent to the processing circuitry block 142 for processing. Transport stream packets from the DVB-T demodulator 134 may also be communicated to the processing circuitry block 142 for processing. The processed DVB-H signals 152 may be communicated for further processing. For example, video signals generated from a received DVB-H signal may be communicated to a TV or a monitor for displaying.

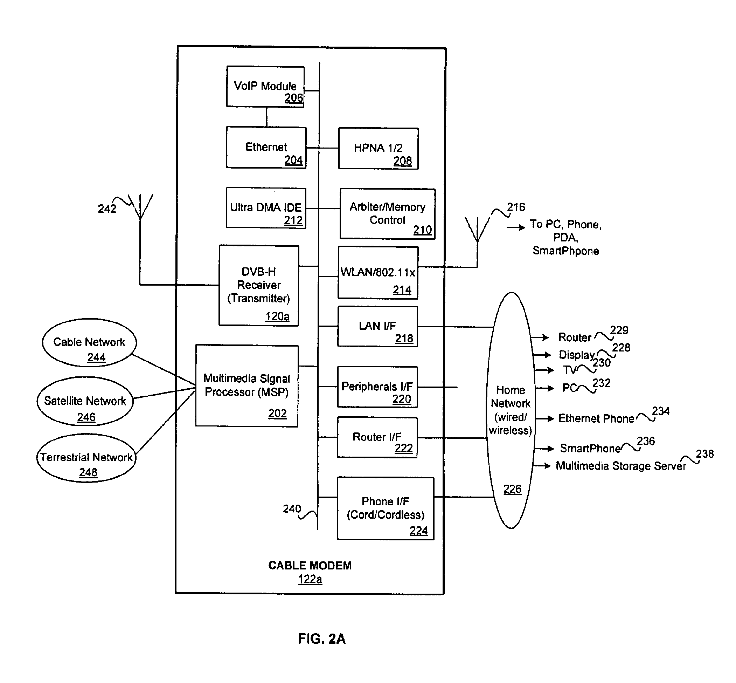

FIG. 2A is a block diagram of an exemplary cable modem with an integrated DVB-H receiver and/or transmitter, in accordance with an embodiment of the invention. Referring to FIG. 2A, there is illustrated the cable modem 122a of FIG. 1A. The cable modem 122a may comprise a DVB-H Rx/Tx 120a, a multimedia signal processor (MSP) 202, an ultra direct memory access (UDMA) integrated drive electronics (IDE) interface (IF) 212, an Ethernet IF 204, and a VolP module 206. The cable modem 122a may further comprise a home phoneline networking (HPNA ½) interface 208, an arbiter/memory control IF 210, a WLAN/802.x module 214, a LAN IF 218, peripherals IF 220, a router IF 222, and a phone IF 224. The DVB-H Rx/Tx 120a may be coupled to antenna 242, and the WLAN/802.x module 214 may be coupled to antenna 216. In an exemplary embodiment of the invention, the cable modem 122a may be implemented on a single chip.

One or more of the interfaces within the cable modem 122a may be coupled to the home network 226, which may be wired and/or wireless. The home network 226 may couple one or more of the interfaces within the cable modem 122a with a plurality of peripheral devices. Exemplary peripheral devices coupled to the cable modem 122a may comprise a display 228, a TV 230, a PC 232, an Ethernet phone 234, a SmartPhone, such as a PDA 236, a router 229, and a multimedia storage server 238. The multimedia storage server 238 may comprise one or more hard disk drives (HDDs) and may be adapted to perform personal video recording (PVR) functionalities, for example. The display 228, the TV 230, the PC 232, the Ethernet phone 234, and the SmartPhone 236 may each receive audio and/or video signals via one or more of the interfaces within the cable modem 122a for further processing and/or display.

The DVB-H Rx/Tx 120a may comprise suitable circuitry, logic and/or code and may be adapted to receive DVB-H signals via the antenna 242 and generate one or more audio and/or video signals based on the received DVB-H signals. The DVB-H Rx/Tx 120a may then communicate the generated audio and/or video signals via the bus 240 to the MSP 202 for further processing. For example, the MSP 202 may convert the generated audio and/or video signals into one or more multimedia signals. The multimedia signals may be in a format that is native to one or more of the devices coupled to the cable modem 122a, such as one or more of the devices coupled to the home network 226. In an exemplary embodiment of the invention, the DVB-H Rx/Tx 120a may communicate the generated audio and/or video signals directly to one or more devices coupled to the cable modem 122a, without additional processing by the MSP 202.

The multimedia signal processor (MSP) 202 may comprise suitable circuitry, logic and/or code and may be adapted to process multimedia signals received from the cable network 244, the satellite network 246, and/or the terrestrial network 248. Furthermore, the MSP 202 may process audio and/or video signals generated by the DVB-H Rx/Tx 120a using one or more DVB-H signals received via the antenna 242. The MSP 202 may perform, for example, front-end processing, such as downconversion and signal decoding. The MSP 202 may also perform advanced video processing, such as video format conversion, digital/analog audio processing, HD and/or digital video processing. In one embodiment of the invention, the DVB-H Rx/Tx 120a may be implemented within the MSP 202, on a single chip.

The UDMA IDE interface 212 may comprise suitable circuitry, logic and/or code and may be utilized to connect one or more hard disk drives (HDDs), for example, to the cable modem 122a. In this regard, the cable modem 122a may utilize the HDDs connected via the UDMA IDE IF 212 for personal video recording (PVR) functionalities.

The Ethernet IF 204 may comprise suitable circuitry, logic and/or code and may be used to connect the cable modem 122a to an Ethernet network. In one embodiment of the invention, the Ethernet IF 204 may comprise a V.90 soft modem interface, which may be used to connect the cable modem 122a to the Internet. The VolP module 206 may comprise suitable circuitry, logic and/or code and may be coupled to the Ethernet IF 206. In an exemplary embodiment of the invention, the VolP module 206 may be coupled to a VolP-enabled telephone, such as the Ethernet telephone 234 via the home network 226.

The home phoneline networking (HPNA ½) IF 208 may comprise suitable circuitry, logic and/or code and may be adapted to provide home phoneline networking functionalities. The HPNA IF 208 may be coupled to one or more HPNA-enabled devices via the home network 226. The arbiter/memory control IF 210 may comprise suitable circuitry, logic and/or code and may provide connection to, for example, external memory, such as flash memory, ROM, and/or DDR SDRAM.

The WLAN/802.x module 214 may comprise suitable circuitry, logic and/or code and may enable a wireless connection of the cable modem 122a to one or more WLAN-enabled devices via the antenna 216. For example, the WLAN/802.x module 214 may connect the cable modem 122a to one or more WLAN-enabled devices, such as the SmartPhone 236, via the home network 226. The LAN IF 218 may comprise suitable circuitry, logic and/or code and may provide a wired LAN connection to the home network 226.

The peripherals IF 220 may comprise suitable circuitry, logic and/or code and may connect the cable modem 122a to one or more of the following exemplary peripherals: infrared (IR) Tx/Rx, infrared data association (IRDA)-enabled peripheral, a universal asynchronous receiver-transmitter (UART), a general purpose input/output (GPIO), a universal serial bus (USB), SmartCard, LED, and/or a keypad.

The router IF 222 may comprise suitable circuitry, logic and/or code and may connect the cable modem 122a to a router. For example, the router IF 222 may connect the cable modem 122a to the router 229 via the home network 226. The phone IF 224 may comprise suitable circuitry, logic and/or code and may connect the cable modem 122a to a wired and/or wireless phone. For example, the phone IF 224 may connect the cable modem 122a to the SmartPhone 236.

In operation, the MSP 202 may receive one or more multimedia signals from the cable network 244, the satellite network 246, and/or the terrestrial network 248. The MSP 202 may process the received multimedia signals and may generate output audio and/or video signals. The generated audio and/or video signals may be communicated to one or more peripherals within the cable modem 122a via the bus 240. The audio and/or video signals may then be communicated to one or more multimedia devices coupled to the cable modem 122a via the peripherals. In one embodiment of the invention, the DVB-H Rx/Tx 120a may receive DVB-H signals via the antenna 242 and may generate audio and/or video signals based on the received DVB-H signals. The DVB-H Rx/Tx 120a may then communicate the audio and/or video signals based on the received DVB-H signals to the MSP 202 for further processing and/or to one or more multimedia devices coupled to the cable modem 122a, via the bus 240 and the interfaces within the cable modem 122a.

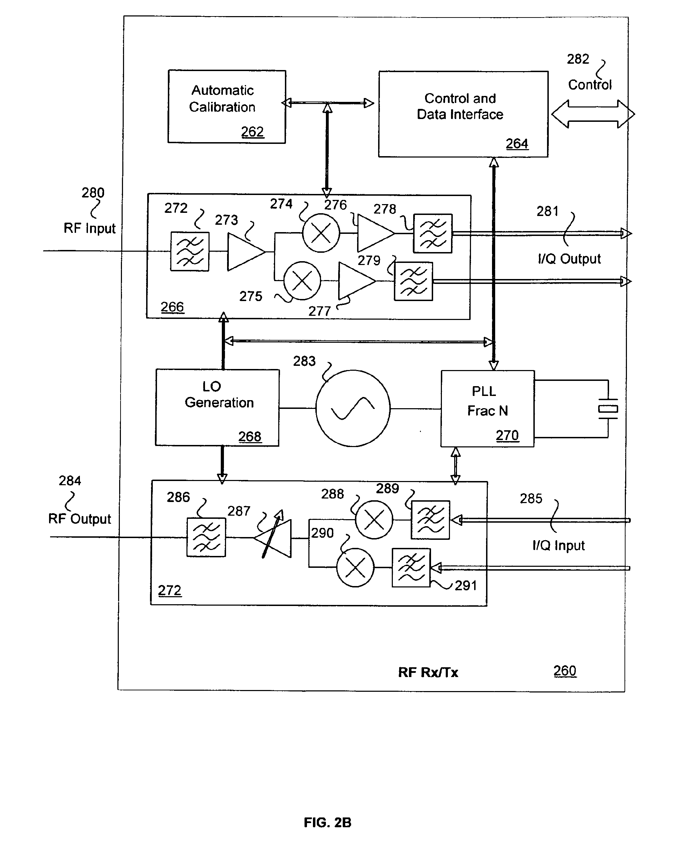

FIG. 2B is a block diagram of an exemplary radio frequency (RF) receiver (Rx)/transmitter (Tx) circuit with automatic calibration, in accordance with an embodiment of the invention. Referring to FIG. 2B, there is illustrated an RF Rx/Tx circuit 260 comprising an automatic calibration block 262, a control and data interface (CDI) block 264, and a Rx input processing block 266. The RF Rx/Tx circuit 260 may also comprise a Tx output processing block 272, a local oscillator generator (LOG) 268, a signal generator 283, and a phase-locked-loop fractional-N synthesizer (PLLFN) 270.

The Rx input processing block 266 may comprise band-pass filters 272, 278, and 279, LNAs 273, 276, and 277, and multipliers 274 and 275. The Rx input processing block 266 may be utilized as a front end processing block and may convert the RF input signal 280 into an I/Q output signal 281. The Tx output processing block 272 may comprise band-pass filters 286, 289, and 291, a variable LNA 287, and multipliers 288 and 290. The Tx output processing block 272 may be utilized to convert an I/Q input signal 285 into an RF output 284. Additionally, the Rx input processing block 266 and the Tx output processing block 272 may utilize the LOG 268, the signal generator 283 and the PLLFN 270 during processing of the RF input signal 280 and the I/Q input signal 285, respectively. The PLLFN 270 and the LOG 280 may be programmable to cover cellular and ISM bands (0.8 GHz - 6 GHz), for example, with a resolution such as 1 Hz or smaller.

The control and data interface 264 may comprise suitable circuitry, logic and/or code may be adapted to change one or more settings of the automatic calibration block 262 or the PLLFN block 270, utilizing the control signal 282.

The automatic calibration block 262 may comprise suitable circuitry, logic and/or code and may be adapted to calibrate the Rx input processing block 266 so that input signals in a plurality of frequency bands may be processed. The automatic calibration block 262 may simultaneous support multiple signal standards and may be automatically calibrated for optimum performance. For example, the automatic calibration block 262 may perform rapid configuration and calibration of the Rx input processing block 266 to maintain call and data integrity in instances when the RF Rx/Tx 260 device transitions from receiving signals from one coverage area to another, or receiving signals in different standards. In this regard, the automatic calibration block 262 may calibrate the Rx input processing block 266 to process wireless signals, such as WLAN, cellular, Bluetooth, and/or UWB, for example.

In one embodiment of the invention, center frequency, bandwidth, gain and/or rejection of the RF Rx/Tx circuit 260 may be programmable. In this regard macro or general programmability may be achieved by programming each block within the RF Rx/Tx circuit 260 for different wireless systems and standards. Larger scale adjustments may also be performed via the automatic calibration block 262 and/or the control and data interface 264 to ensure overall system optimization, or by assimilating feedback from micro calibrators.

In another embodiment of the invention, the RF Rx/Tx circuit 260 may utilize micro or local programmability by utilizing a low resolution microcontroller, for example, in one or more blocks within the RF Rx/Tx circuit 260 that monitors performance and performs adjustments in real-time. Feedback from the microcontrollers may then be provided to a macro calibrator, such as the automatic calibration block 262.

Referring to FIGS. 2A and 2B, in yet another embodiment of the invention, the DVB-H Rx/Tx 120a and the MSP 202 may share the same RF Rx/Tx circuit 260. In this regard, the RF Rx/Tx circuit 260 may be utilized as a DVB-H tuner utilizing, for example, a DVB-H signal calibration setting of the automatic calibration block 262. Similarly, the RF Rx/Tx circuit 260 may be utilized as a cable tuner utilizing, for example, a cable signal calibration setting of the automatic calibration block 262.

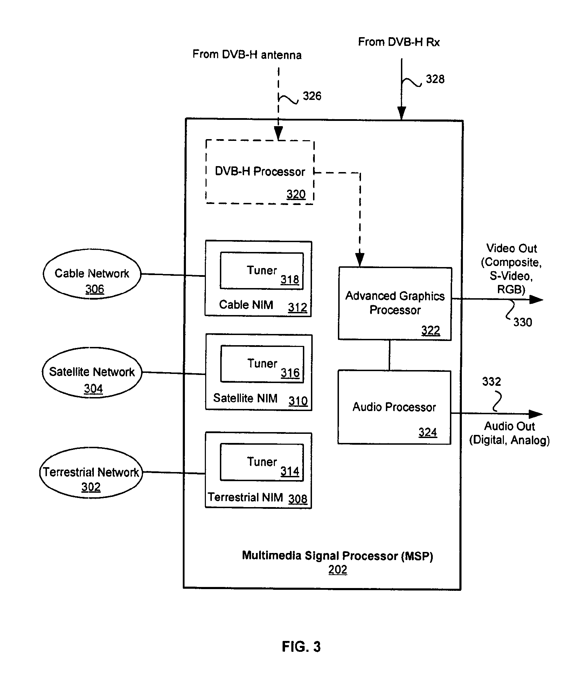

FIG. 3 is a block diagram of an exemplary multimedia signal processor (MSP), which may be used in accordance with an embodiment of the invention. Referring to FIG. 3, the MSP 202 may comprise a plurality of network interface modules (NIMs), such as a terrestrial NIM 308, a satellite NIM 310, and a cable NIM 312. The MSP 202 may further comprise an advanced graphics processor (AGP) 322 and an audio processor 324.

The NIMs 308, 310, 312 may comprise suitable circuitry, logic and/or code and may be adapted to receive multimedia signals from the terrestrial network 302, the satellite network 304, and/or the cable network 306, respectively. In this regard, the NIMs 308, 310, 312 may comprise tuners 314, 316, 318, respectively, and may perform front-end signal processing, such as demodulation and decoding. The front-end processed signals may then be communicated to the AGP 322 and/or the audio processor 324 for further processing.

The AGP 322 may comprise suitable circuitry, logic and/or code and may be adapted to perform advanced video signal processing, such as format conversion, for example. In addition, the AGP 322 may receive audio and/or video signals 328 from a DVB-H Rx/Tx, such as the DVB-H Rx/Tx 120a of FIG. 2A. In an exemplary embodiment of the invention, the MSP 202 may comprise a DVB-H processor 320. The DVB-H processor 320 may comprise suitable circuitry, logic and/or code and may be adapted to receive DVB-H signals 326 directly from a DVB-H wireless antenna coupled to the MSP 202 and/or to a DVB-H receiver coupled to the MSP 202. In this regard, processing of DVB-H signals may be performed within the MSP 202. The audio and/or video signals generated by the DVB-H processor 320 from the received DVB-H signals 326 may also be communicated to the AGP 322 for processing. The AGP 322 may generate video output signals 330. The video output signals 330 may comprise composite, S-Video, and/or RGB signals.

The audio processor 324 may comprise suitable circuitry, logic and/or code and may be adapted to process multimedia signals received from the NIMs 308, 310, 312, and/or the AGP 322, and generate audio output signals 332. The audio output signals 332 may comprise digital and/or analog audio signals.

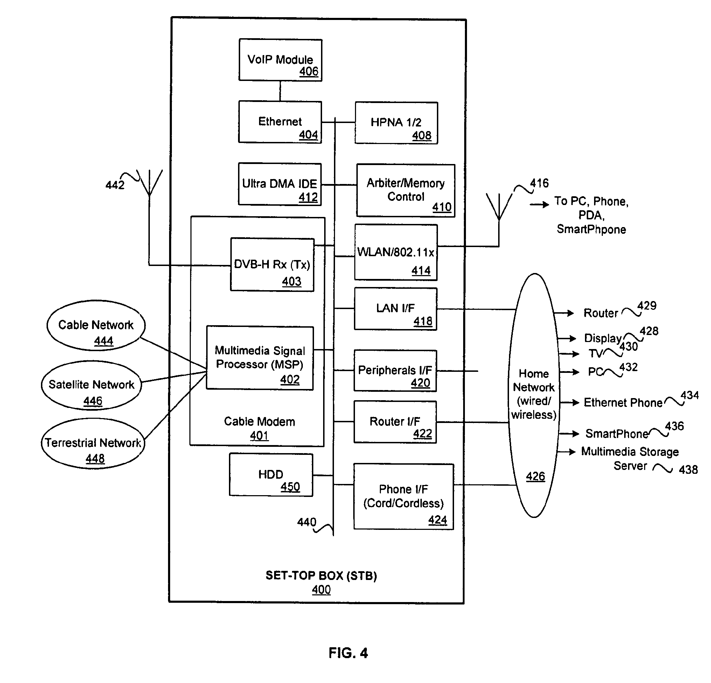

FIG. 4 is a block diagram of an exemplary set-top box (STB) with an integrated DVB-H receiver and/or transmitter, in accordance with an embodiment of the invention. Referring to FIG. 4, the set-top box (STB) 400 may comprise a cable modem 401, an ultra direct memory access (UDMA) integrated drive electronics (IDE) interface (IF) 412, an Ethernet IF 404, and a VolP module 406. The STB 400 may further comprise a home phoneline networking (HPNA ½) interface 408, a hard disk drive (HDD) 450, an arbiter/memory control IF 410, a WLAN/802.x module 414, a LAN IF 418, peripherals IF 420, a router IF 422, and a phone IF 424. The WLAN/802.x module 414 may be coupled to antenna 416.

The cable modem 401 may comprise a DVB-H Rx/Tx 403 and a multimedia signal processor (MSP) 402. The DVB-H Rx/Tx 403 may be coupled to the antenna 442 and may perform the same functionalities as the DVB-H Rx/Tx 120a in FIG. 2A. Similarly, the MSP 402 may perform the same functionalities as MSP 202 of FIGS. 2 and 3. In an exemplary embodiment of the invention, the cable modem 401 may be implemented on a single chip.

One or more of the interfaces within the STB 400 may be coupled to home network 426, which may be wired and/or wireless. The home network 426 may couple one or more of the interfaces within the STB 400 with a plurality of peripheral devices. The peripheral devices coupled to the STB 400 may comprise a display 428, a TV 430, a PC 432, an Ethernet phone 434, a SmartPhone, such as a PDA 436, a router 429, and a multimedia storage server 438. The multimedia storage server 438 may comprise one or more hard disk drives (HDDs) and may be adapted to perform personal video recording (PVR) functionalities, for example. The display 428, the TV 430, the PC 432, the Ethernet phone 434, and the SmartPhone 436 may each receive audio and/or video signals via one or more of the interfaces within the STB 400 for further processing and/or display.

The DVB-H Rx/Tx 403 within the cable modem 401 may comprise suitable circuitry, logic and/or code and may be adapted to receive DVB-H signals via the antenna 442 and generate one or more audio and/or video signals based on the received DVB-H signals. The DVB-H Rx/Tx 403 may then communicate the generated audio and/or video signals to the MSP 402 for further processing. For example, the MSP 402 may convert the generated audio and/or video signals into one or more multimedia signals. The multimedia signals may be in a format that is native to one or more of the devices coupled to the STB 400, such as one or more of the devices coupled to the home network 426. In an exemplary embodiment of the invention, the DVB-H Rx/Tx 403 may communicate the generated audio and/or video signals directly to one or more devices coupled to the STB 400, without additional processing by the MSP 402.

The multimedia signal processor (MSP) 402 within the cable modem 401 may comprise suitable circuitry, logic and/or code and may be adapted to process multimedia signals received from the cable network 444, the satellite network 446, and/or the terrestrial network 448. Furthermore, the MSP 402 may process audio and/or video signals generated by the DVB-H Rx/Tx 403 using one or more DVB-H signals received via the antenna 442. The MSP 402 may perform, for example, front-end processing, such as downconversion and signal decoding. The MSP 402 may also perform advanced video processing, such as video format conversion, digital/analog audio processing, HD and/or other digital video processing. In one embodiment of the invention, the DVB-H Rx/Tx 403 may be implemented within the MSP 402, on a single chip.

The UDMA IDE interface 412, the Ethernet IF 404, the VolP module 406, the home phoneline networking (HPNA ½) IF 408, the arbiter/memory control IF 410, the WLAN/802.x module 414, the LAN IF 418, the peripherals IF 420, the router IF 422, and the phone IF 424 may be implemented within the STB 400 and may perform functions similar to the functions performed by the corresponding interfaces as described above in regard to FIG. 2A. The HDD 450 within the STB 400 may be used to perform PVR functionalities.

In operation, the MSP 402 may receive one or more multimedia signals from the cable network 444, the satellite network 446, and/or the terrestrial network 448. The MSP 402 may process the received multimedia signals and may generate output audio and/or video signals. The generated audio and/or video signals may be communicated to one or more peripherals within the STB 400 via the bus 440. The audio and/or video signals may then be communicated to one or more multimedia devices coupled to the STB 400 via the peripherals. In one embodiment of the invention, the DVB-H Rx/Tx 403 may receive DVB-H signals via the antenna 442 and may generate audio and/or video signals based on the received DVB-H signals. The DVB-H Rx/Tx 403 may then communicate the audio and/or video signals based on the received DVB-H signals to the MSP 402 for further processing and/or to one or more multimedia devices coupled to the STB 400, via the bus 440 and the interfaces within the STB 400.

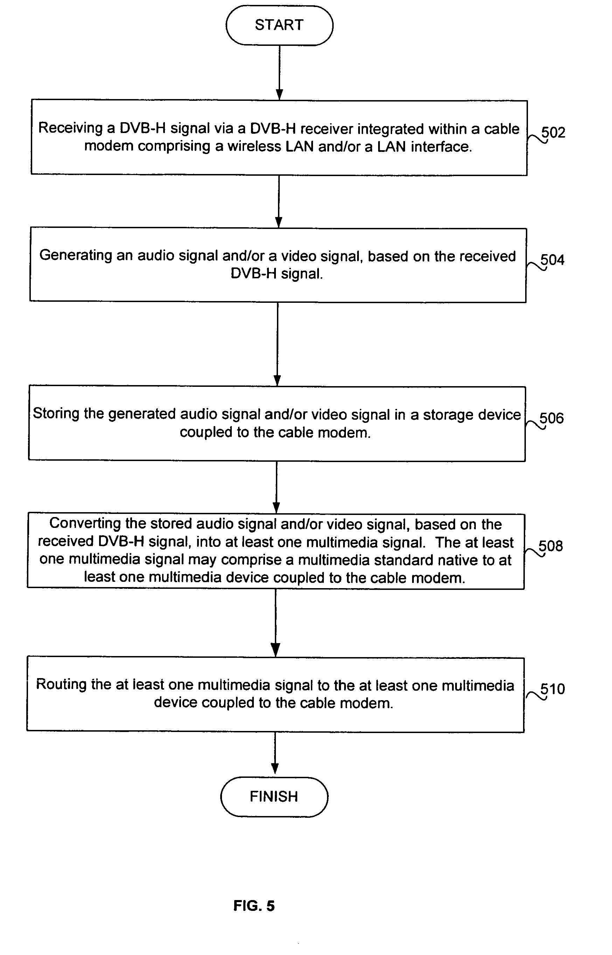

FIG. 5 is a flow diagram illustrating exemplary steps for processing multimedia data, in accordance with an embodiment of the invention. Referring to FIGS. 2 and 5, at 502, the DVB-H Rx/Tx 120a may receive a DVB-H signal via the antenna 242. The DVB-H Rx/Tx 120a may be integrated within a cable modem 122a comprising a wireless LAN 214 and/or a LAN 218 interface. At 504, the DVB-H Rx/Tx 120a may generate an audio signal and/or a video signal, based on the received DVB-H signal. At 506, the generated audio signal and/or video signal may be stored in a storage device coupled to the cable modem. The storage device may comprise, for example, a multimedia storage server 238 and/or a hard disk drive (HDD) communicatively coupled to the cable modem 122a for performing PVR functionalities. At 508, the stored audio signal and/or video signal may be converted by the MSP 202, based on the received DVB-H signal, into at least one multimedia signal. The at least one multimedia signal may comprise a multimedia standard native to at least one multimedia device coupled to the cable modem 122a. At 510, the multimedia signal may be routed to a multimedia device coupled to the cable modem 122a. For example, the multimedia signal may be routed to the TV 230 via the home network 226.

Accordingly, aspects of the invention may be realized in hardware, software, firmware or a combination thereof. The invention may be realized in a centralized fashion in at least one computer system or in a distributed fashion where different elements are spread across several interconnected computer systems. Any kind of computer system or other apparatus adapted for carrying out the methods described herein is suited. A typical combination of hardware, software and firmware may be a general-purpose computer system with a computer program that, when being loaded and executed, controls the computer system such that it carries out the methods described herein.

One embodiment of the present invention may be implemented as a board level product, as a single chip, application specific integrated circuit (ASIC), or with varying levels integrated on a single chip with other portions of the system as separate components. The degree of integration of the system will primarily be determined by speed and cost considerations. Because of the sophisticated nature of modem processors, it is possible to utilize a commercially available processor, which may be implemented external to an ASIC implementation of the present system. Alternatively, if the processor is available as an ASIC core or logic block, then the commercially available processor may be implemented as part of an ASIC device with various functions implemented as firmware.

The present invention may also be embedded in a computer program product, which comprises all the features enabling the implementation of the methods described herein, and which when loaded in a computer system is able to carry out these methods. Computer program in the present context may mean, for example, any expression, in any language, code or notation, of a set of instructions intended to cause a system having an information processing capability to perform a particular function either directly or after either or both of the following: a) conversion to another language, code or notation; b) reproduction in a different material form. However, other meanings of computer program within the understanding of those skilled in the art are also contemplated by the present invention.

While the invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiments disclosed, but that the present invention will include all embodiments falling within the scope of the appended claims.

## Claims

1. A method for processing multimedia data, the method comprising:
receiving a DVB-H signal via a DVB-H receiver integrated within a cable modem comprising a wireless interface or a wired interface; and
routing from within said cable modem, said received DVB-H signal to at least one multimedia device communicatively coupled to said cable modem via said wireless or said wired interface.

2. The method according to claim 1, comprising generating at least one of:
an audio signal and a video signal, based on said received DVB-H signal.

3. The method according to claim 2, comprising communicating said at least one of: said audio signal and said video signal to at least one multimedia device communicatively coupled to said cable modem.

4. The method according to claim 1, where said wired interface comprises at least one of: an Ethernet interface, and a serial interface.

5. The method according to claim 1, wherein said wireless interface comprises a WLAN interface.

6. The method according to claim 1, comprising converting said received DVB-H signal into at least one converted multimedia signal, prior to said routing to said at least one multimedia device.

7. A system for processing multimedia data, the system comprising:
DVB-H receiver circuitry that enables receiving of a DVB-H signal, said DVB-H receiver circuitry integrated with cable modem circuitry comprising a wireless interface or a wired interface; and
said cable modem circuitry enables routing of said received DVB-H signal from within said cable modem circuitry to at least one multimedia device communicatively coupled to said cable modem circuitry via said wireless or said wired interface.

8. The system according to claim 7, wherein said cable modem circuitry enables generating of at least one of: an audio signal and a video signal, based on said received DVB-H signal.

9. The system according to claim 8, wherein said cable modem circuitry enables communication of said at least one of: said audio signal and said video signal to at least one multimedia device communicatively coupled to said cable modem.

10. The system according to claim 7, where said wired interface comprises at least one of: an Ethernet interface, and a serial interface.
